# EUROPÄISCHE PATENTSCHRIFT

(11) **EP 1 393 797 B1**
(45) Veröffentlichungstag und Bekanntmachung des Hinweises auf die Patenterteilung: **12.07.2006**
(21) Anmeldenummer: 03017719.0
(22) Anmeldetag: 02.08.2003
(51) Int. Cl.: B01F 11/00, B01F 9/00

(54) **Schüttel- und Mischgerät**
Shaking and mixing apparatus
Appareil pour agiter et pour mélanger

(30) Priorität: 29.08.2002 DE 10239786
(43) Veröffentlichungstag der Anmeldung: 03.03.2004
(73) Patentinhaber: Hans Heidolph GmbH & Co. KG, 93309 Kelheim (DE)
(72) Erfinder: Vollgold, Günter, 91126 Rednitehembach (DE)
(74) Vertreter: Pfeifer, Hans-Peter

(56) Entgegenhaltungen:
- US-A- 4 125 335
- US-A- 5 567 050

## Beschreibung

Die Erfindung betrifft ein Schüttel- und Mischgerät mit einem elektrischen Antrieb, einer von dem Antrieb angetriebenen Exzentereinheit und einer von der Exzentereinheit bewegten Gefäßhalterung, die zur Aufnahme der von dem Schüttel- und Mischgerät zu bewegenden Gefäße ausgebildet ist.

Derartige Schüttel- und Mischgeräte sind in vielfachen Ausführungsformen im Stand der Technik bekannt. Sie werden zum Schütteln und Mischen von Proben, die in kleinen aber auch großen Gefäßen vorliegen, in verschiedenen Gebieten wie der Umwelttechnik, der Biologie, der Biochemie, der medizinischen Diagnostik, der Mikrobiologie, der Zellbiologie usw. eingesetzt. Die mit der zu schüttelnden oder zu mischenden Probe gefüllten Gefäße können viele, für den jeweiligen Anwendungszweck geeignete Gefäße sein, zum Beispiel Reagenzgläser, Kolben, Erlenmeyer-Kolben, Schalen, Petrischalen, Racks, Scheidetrichter, Mikrotiterplatten, Flaschen, Röhrchen oder sonstige Gefäße. Auch die doppel- oder mehrstöckige Anordnung von Gefäßen beim Schütteln oder Mischen ist gebräuchlich.

Aus den Dokumenten US 4,125,335 und 5,567,050 sind Bewegungsvorrichtungen bekannt, bei denen mittels einer schräg angeordneten Hülse eine Gefäßhalterung derart in Bewegung versetzt wird, daß sich die von der Gefäßhalterung aufgenommenen Gefäße auf- und ab bewegen, ohne daß dabei eine kreis- oder ellipsenförmige Bewegung der Gefäße stattfindet, die zur Ausbildung eines Schütteltrichters in flüssigen Proben in den Gefäßen führen könnte.

Aus der WO 98/32838 ist ein Schüttel- und Mischgerät bekannt, bei dem eine Gefäßhalterung mit einer gelenkig an einer Antriebswelle angebrachten Exzentereinheit räumlich in drei Dimensionen bewegt wird und dabei neben einer Rotationsbewegung vertikale Auf- und Abbewegungen ausführt.

Aus der FR-A-977251 ist ein durch eine Exzentereinheit angetriebener Schütteltisch bekannt, auf dem Gefäße mit zu mischenden Proben abgestellt werden können.

Zum Anbringen von Gefäßen an einem Schüttel- und Mischgerät werden jeweils geeignete Gefäßhalterungen und eventuelle Aufsätze oder Adapter verwendet. Neben universell einsetzbaren Schüttel- und Mischgeräten sowie universell einsetzbaren Gefäßhalterungen gibt es auch spezielle Ausbildungen, beispielsweise Reagenzglasschüttler oder Plattformschüttler.

Die Schüttel- und Mischbewegung kann auf vielfältige Weise ausgestaltet sein. Man unterscheidet zum Beispiel ein-, zwei- und dreidimensionale Bewegungen sowie vibrierende, kreisförmige, rotierende, reziproke, Überkopf-, wippende und transversale Bewegungen. Die Schüttel- und Mischgeräte verfügen zumeist über eine einstellbare Drehzahl bzw. Schüttelfrequenz und über einen fest vorgegebenen oder einstellbaren Orbit, d.h. eine fest vorgegebene oder einstellbare Amplitude der Bewegungseinheit. Die sich in der Praxis einstellende Amplitude des geschüttelten Gutes bzw. der bewegten Gefäße kann durch Resonanzerscheinungen und elastische oder bewegliche Halterungen jedoch hiervon abweichen.

Die Schüttel- und Mischgeräte nach dem Stand der Technik sind so aufgebaut, daß auf einem Schütteltisch, der durch eine Exzentereinheit angetrieben wird, Gefäßhalterungen befestigt sind, die Gefäße aufnehmen, in der sich die zu schüttelnde Probe befindet. Um den beim Schütteln und Mischen auftretenden Massenkräfte der Gefäßhalterung, der Gefäße und der Proben entgegenzuwirken, ist es bekannt, eine Ausgleichsmasse vorzusehen. Dadurch werden die beim Schütteln und Mischen auftretenden Fliehkräfte reduziert oder kompensiert.

Die nach dem Stand der Technik bekannten Schüttel- und Mischgeräte arbeiten jedoch noch nicht voll zufriedenstellend und weisen insbesondere folgende Nachteile auf:
- Die Geräte wackeln und zittern beim Betrieb stark, insbesondere bei hohen Schüttelfrequenzen oder bei schweren Gefäßhalterungen und Proben. Wenn sich diese Erscheinung nicht durch bewegte Ausgleichsmassen beheben läßt, werden die Gehäuse der Schüttel- und Mischgeräte mit schweren Bodenplatten versehen, die durch ihre Massenträgheit das Gerät ruhig halten sollen. Dadurch werden jedoch die Geräte relativ schwer, es treten hohe Belastungen durch die Fliehkräfte an den Lagern auf und die Zitter- und Wackelbewegung des Gerätes selbst wird nicht wesentlich gedämpft.
- Die bewegten Gefäße wackeln stark und führen keine saubere Kreisbewegung, sondern eine elliptische oder andersgeformte Wackelbewegung durch. Dies hat Nachteile für die Durchmischung des Mischgutes in dem bewegten Gefäß, da sich nur bei einer relativ ungestörten Kreisbewegung der Gefäße ein tiefer Trichter in der Probe ausbildet und ein hoher Durchmischungsgrad erzielt wird.
- Bei hohen Schüttelfrequenzen und langen, schlanken Gefäßen kann es auch dazu kommen, daß die Wackel- und Zitterbewegung der Gefäße beim Schütteln dazu führt, daß die Gefäße nach oben wandern und schließlich aus der Gefäßhalterung herausfallen.

Der Erfindung liegt unter Berücksichtigung dieses Standes der Technik die Aufgabe zugrunde, ein Schüttel- und Mischgerät der eingangs beschriebenen Art, insbesondere für schlanke Gefäße, zu schaffen, das weniger wackelt und zittert und bei dem die Gefäße weniger wackeln, eine präzisere Schüttelbewegung durchführen und nicht durch Wackeln und Zittern aus der Gefäßhalterung herausfallen.

Diese Aufgabe wird erfindungsgemäß durch ein Schüttel- und Mischgerät mit den Merkmalen des beigefügten Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Ein erfindungsgemäßes Schüttel- und Mischgerät mit einem elektrischen Antrieb, einer von dem Antrieb angetriebenen Exzentereinheit und einer von der Exzentereinheit bewegten Gefäßhalterung, die zur Aufnahme der, von dem Schüttel- und Mischgerät zu bewegenden Gefäße ausgebildet ist, weist also die Besonderheit auf, daß sich der gemeinsame Schwerpunkt von Gefäßhalterung und Gefäßen in einer parallel zur Exzenterbewegung orientierten Ebene befindet, die nur einen geringen Höhenabstand zu der parallel zur Exzenterbewegung orientierte Ebene aufweist, in der der Schwerpunkt der Exzentereinheit liegt.

Im Rahmen der Erfindung hat sich herausgestellt, daß der übliche Aufbau von Schüttel- und Mischgeräten, bei denen die Gefäßhalterungen und die Gefäße mit den Proben auf einem Schütteltisch oberhalb der Exzentereinheit angeordnet werden, die oben erläuterten Nachteile zur Folge hat und daß diese Nachteile durch die erfindungsgemäße Ausbildung mit einem tiefer liegenden Schwerpunkt von Gefäßhalterung und Gefäßen behoben werden können. Wenn die Gefäßhalterung und die Gefäße sozusagen um die Exzentereinheit herum statt über ihr angeordnet werden, wackelt und zittert das Schüttel- und Mischgerät beim Betrieb weniger, die Gefäße wackeln nicht so stark, und es bildet sich eine präzisere Kreisbewegung aus, so daß in den geschüttelten Proben ein tiefer Trichter entsteht, und die Gefäße fallen nicht nach oben aus der Gefäßhalterung heraus.

Ein erfindungsgemäßes Schüttel- und Mischgerät hat die weiteren Vorteile, daß es mit einer kleineren Ausgleichsmasse in der Exzentereinheit, mit größeren und schwereren Proben und Gefäßen, mit einer größeren Schüttelfrequenz und mit einem größeren Orbit als ein Schüttel- und Mischgerät nach dem Stand der Technik betrieben werden kann.

Nach weiteren vorteilhaften Merkmalen wird vorgeschlagen, daß der Schwerpunkt von Gefäßhalterung und Gefäßen unterhalb der in der Exzenterbewegung orientierten Ebene, in der sich der oberste Punkt der Exzentereinheit befindet, angeordnet ist, oder daß der Schwerpunkt von Gefäßhalterung und Gefäßen oberhalb der in der Exzenterbewegung orientierten Ebene, in der sich der unterste Punkt der Exzentereinheit befindet, angeordnet ist.

In einer bevorzugten Ausbildung wird vorgeschlagen, daß die Ebene des Schwerpunkts von Gefäßhalterung und Gefäßen und die Ebene des Schwerpunkts der Exzentereinheit sich im wesentlichen decken. Eine präzise mathematische Übereinstimmung wird in der Praxis kaum erreichbar sein, da sich die Lage des Schwerpunkts von Gefäßhalterung und Gefäßen durch unterschiedliche Gefäße oder durch unterschiedliche Befüllung der Gefäße mit Proben verändert. Angestrebt wird jedoch ein möglichst geringer Höhenabstand der Schwerpunkte. Ferner ist es vorteilhaft, wenn auch der Seitenabstand der Schwerpunkte möglichst gering ist.

Die Konstruktion des Schüttel- und Mischgeräts mit Gefäßhalterung und Gefäßen kann so ausgelegt sein, daß der Höhen- und/oder Seitenabstand, der erfindungsgemäß möglichst gering sein soll, auf leere, in die Gefäßhalterung eingesetzte Gefäße bezogen ist. Nach einem bevorzugten Merkmal, insbesondere bei Schüttel- und Mischgeräten mit vielen oder schweren Gefäßen und Proben, wird jedoch vorgeschlagen, daß der Höhen- und/oder Seitenabstand auf in die Gefäßhalterung eingesetzte Gefäße bezogen ist, die mit einer typischen Menge eines typischen Schüttel- oder Mischgutes befüllt sind. Durch Berücksichtigung von in der Praxis auftretenden typischen Beladungen bei der Anordnung und Konstruktion von Gefäßhalterung und Gefäßen kann eine dichtere Anordnung des Schwerpunktes von Gefäßhalterung und Gefäßen zu dem Schwerpunkt der Exzentereinheit erzielt werden.

Die Erfindung wird nachfolgend anhand der in den Figuren dargestellten Ausführungsbeispiele näher erläutert. Die darin beschriebenen Besonderheiten können einzeln oder in Kombination miteinander eingesetzt werden, um bevorzugte Ausgestaltungen der Erfindung zu schaffen.

Es zeigen:
- Fig. 1: einen Schnitt durch ein Schüttel- und Mischgerät nach dem Stand der Technik,
- Fig. 2: einen Schnitt durch ein erfindungsgemäßes Schüttel- und Mischgerät,
- Fig. 3: eine detaillierte Ansicht zur Exzentereinheit zu Fig. 2 mit Gefäßhalterung,
- Fig. 4: eine Abwandlung zu Fig. 2,
- Fig. 5: eine erste erfindungsgemäße Gefäßhalterung,
- Fig. 6: eine zweite erfindungsgemäße Gefäßhalterung,
- Fig. 7: eine dritte erfindungsgemäße Gefäßhalterung,
- Fig. 8: eine vierte erfindungsgemäße Gefäßhalterung,
- Fig. 9: eine fünfte erfindungsgemäße Gefäßhalterung,
- Fig. 10: eine sechste erfindungsgemäße Gefäßhalterung,
- Fig. 11: einen Schnitt durch eine erfindungsgemäße Gefäßhalterung mit Heizeinrichtung,
- Fig. 12: eine erste Ansicht der Gefäßhalterung von Fig. 11,
- Fig. 13: eine zweite Ansicht der Gefäßhalterung von Fig. 11,
- Fig. 14: einen Schnitt durch eine erfindungsgemäße Gefäßhalterung mit Heiz- und Kühleinrichtung,
- Fig. 15: eine erste Ansicht der Gefäßhalterung von Fig. 14 und
- Fig. 16: eine zweite Ansicht der Gefäßhalterung von Fig. 14.

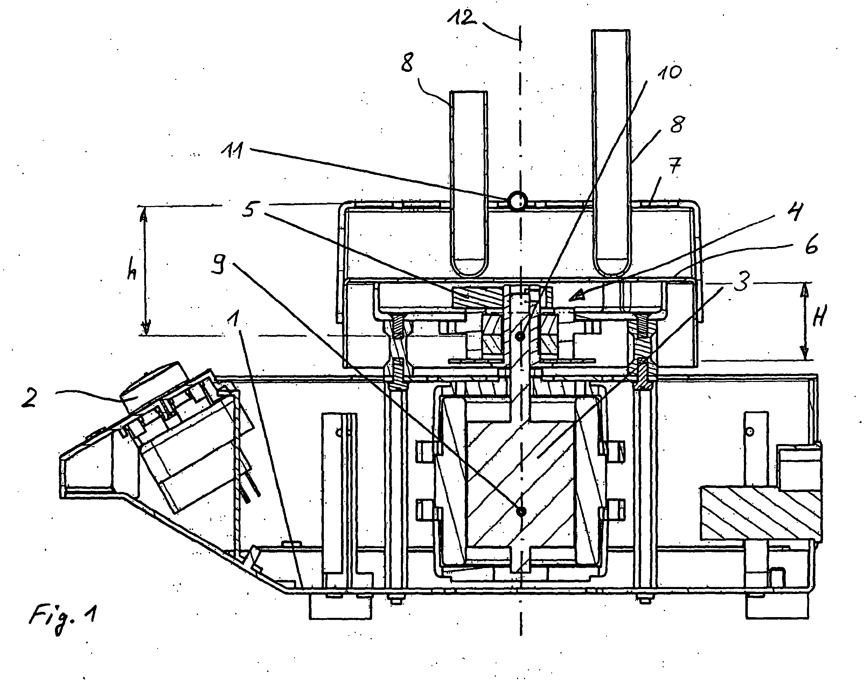

Die Fig. 1 zeigt einen Schnitt durch ein typisches Schüttel- und Mischgerät nach dem Stand der Technik. Es umfaßt ein Gehäuse 1 mit Bedien- und Einstellelementen 2 und einem elektrischen Antrieb, beispielsweise einen durch ein elektrisches Drehfeld angetriebenen Magneten oder einen Antriebsmotor 3, der eine Exzentereinheit 4 mit einer Ausgleichsmasse 5 antreibt. Die Exzentereinheit 4 weist einen Schütteltisch 6 auf, auf dem mittels einer Gefäßhalterung 7 die zu bewegenden Gefäße 8 angeordnet werden.

Bei der Auslegung der Schüttel- und Mischgeräte nach dem Stand der Technik wird darauf geachtet, daß der Schwerpunkt 9 des Geräts, der Schwerpunkt 10 der Exzentereinheit und der Schwerpunkt 11 von Gefäßhalterung und Gefäßen möglichst fluchtend übereinander liegen, um Vibrationen des Geräts beim Betrieb zu minimieren. In der Praxis hat sich jedoch herausgestellt, daß es dennoch im hohen Maße zu ungewollten Vibrationen des Schüttel- und Mischgeräts und zu Resonanzerscheinungen kommen kann.

Diese Vibrationen und Resonanzerscheinungen sind störend, weil sie sich auf den Untergrund, auf dem das Schüttel- und Mischgerät steht, auswirken, das Schüttel- und Mischgerät auf dem Untergrund wandern kann und die eigentliche gewollte Schüttelbewegung verfälscht wird, so daß sich kein tiefer Schütteltrichter in den Proben ausbildet. Unter Schütteltrichter wird die auch als Thrombe bezeichnete Vertiefung verstanden, die sich beim Schütteln einer flüssigen Probe im Bereich ihrer zentralen senkrechten Achse ausbildet. Um diese ungewollten Erscheinungen zu vermindern, müssen die Schüttelfrequenz und die Schüttelamplitude, d.h. der Orbit eingeschränkt werden, oder der Vibration wird mit einer großen Gerätemasse entgegengewirkt. Bei starken Resonanzerscheinungen können die Gefäße 8 auch nach oben aus der Gefäßhalterung 7 herausfallen.

Im Rahmen der Erfindung hat sich herausgestellt, daß maßgeblich zu diesen ungewünschten Erscheinungen der Höhenabstand h zwischen dem Schwerpunkt 10 der Exzentereinheit und dem Schwerpunkt 11 von Gefäßhalterung 7 und Gefäßen 8, gemessen zwischen parallel zur Exzenterbewegung orientierten Ebenen, beiträgt und daß diese Nachteile durch einen geringen Höhenabstand h vermieden oder zumindest stark reduziert werden können. Unter Ebene der Exzenterbewegung wird dabei eine Bewegung senkrecht zur Drehachse 12 der Exzentereinheit 4 verstanden, d.h. eine Ebene, in der die Ausgleichsmasse 5 rotiert und die parallel zu der Ebene liegt, in der die Gefäßhalterung 7 und die Gefäße 8 bewegt werden.

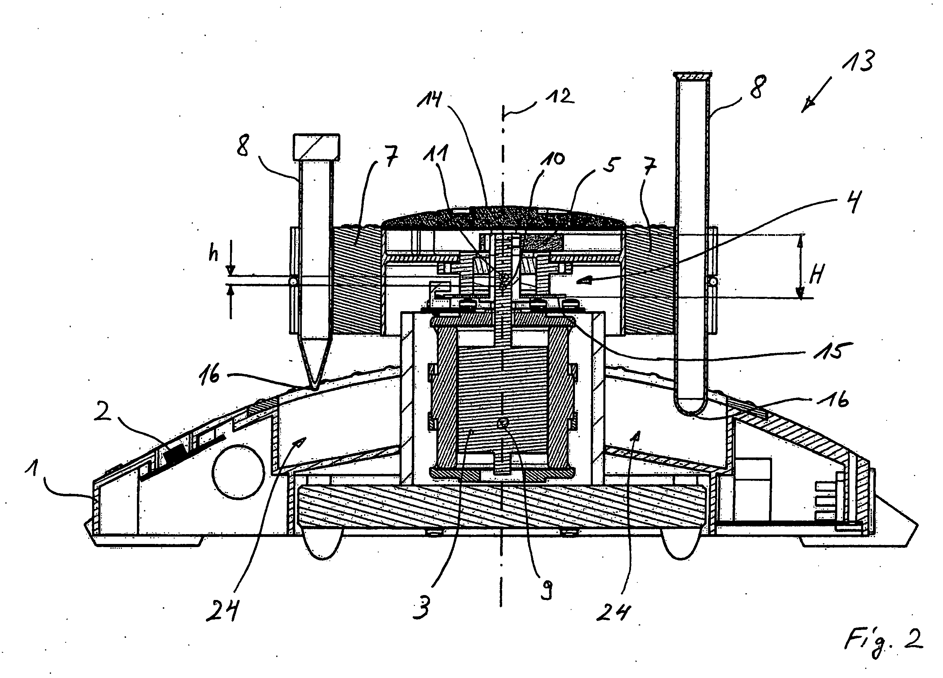

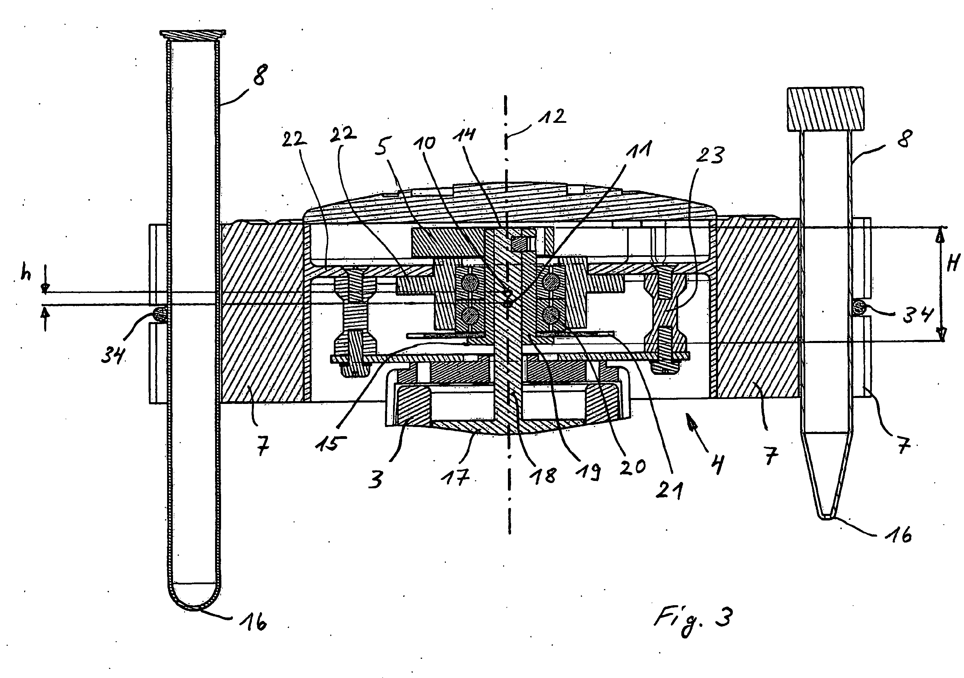

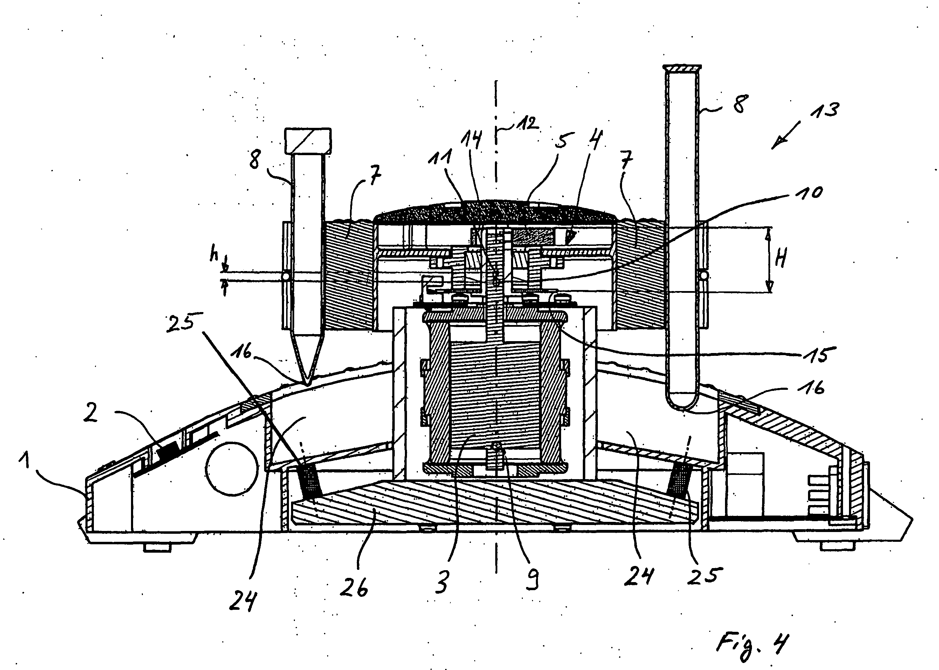

Die Fig. 2 zeigt eine entsprechende Ausbildung eines erfindungsgemäßen Schüttel- und Mischgeräts 13, bei dem die Gefäßhalterung 7 mit den Gefäßen 8 derart ausgebildet ist, daß der Höhenabstand h von dem gemeinsamen Schwerpunkt 11 von Gefäßhalterung und Gefäßen zu dem Schwerpunkt 10 der Exzentereinheit möglichst gering ist und diese beiden Schwerpunkte 10, 11 im wesentlichen zusammenfallen. In der Fig. 2 ist (wie auch in den Figuren 3 und 4) zur Veranschaulichung ein verbleibender geringer Höhenabstand h eingezeichnet. Der Schwerpunkt 11 der Gefäßhalterung 7 und der befüllten Gefäße 8 ist innerhalb der Exzentereinheit (Höhe H) und nicht darüber wie in Fig. 1 nach dem Stand der Technik.

Um einen geringen Höhenabstand h zu realisieren, sind die Gefäßhalterung 7 und die Gefäße 8 nicht oberhalb der Exzentereinheit 4, sondern sozusagen um die Exzentereinheit 4 herum angeordnet. Dabei kann sich nach bevorzugten Ausgestaltungen ergeben, daß der Schwerpunkt 11 von Gefäßhalterung 7 und Gefäßen 8 unterhalb der in der Exzenterbewegung orientierten Ebene, in der sich der oberste Punkt 14 der Exzentereinheit 4 befindet, angeordnet ist, sowie daß der Schwerpunkt 11 von Gefäßhalterung 7 und Gefäßen 8 oberhalb der in der Exzenterbewegung orientierten Ebene, in der sich der unterste Punkt 15 der Exzentereinheit 4 befindet, angeordnet ist. Um einen möglichst geringen Höhenabstand h zu erzielen, kann ferner nach einem vorteilhaften Merkmal vorgesehen sein, daß der unterste Punkt 16 der Gefäße 8 unterhalb der in der Exzenterbewegung orientierten Ebene, in der sich der unterste Punkt 15 der Exzentereinheit 4 befindet, angeordnet ist.

In der Praxis kann es, auch in Abhängigkeit von der Befüllung der Gefäße 8 mit Proben, nicht immer präzise realisiert werden, daß der Höhenabstand h möglichst null ist. Nach einem vorteilhaften Merkmal wird daher vorgeschlagen, daß der Höhenabstand h zwischen der Ebene des Schwerpunkts 11 von Gefäßhalterung 7 und Gefäßen 8 und der Ebene des Schwerpunkts 10 der Exzentereinheit 4 kleiner als die Bauhöhe H der Exzentereinheit 4, gemessen senkrecht zur Ebene der Exzenterbewegung, vorzugsweise kleiner als 50%, bevorzugt kleiner als 25% und besonders bevorzugt kleiner als 10% der Bauhöhe H ist. Angestrebt wird jedoch, wie bereits erläutert wurde, ein möglichst geringer Höhenabstand h, also daß sich die Ebene des Schwerpunkts 11 von Gefäßhalterung 7 und Gefäßen 8 und die Ebene des Schwerpunkts 10 der Exzentereinheit 4 im wesentlichen decken. Die Bauhöhe H der Exzentereinheit 4 reicht von ihrem obersten Punkt 14 bis zu ihrem untersten Punkt 15.

Bei einem erfindungsgemäß Schüttel- und Mischgerät 13 wird man ebenfalls bestrebt sein, den Schwerpunkt 9 des Geräts, den Schwerpunkt 10 der Exzentereinheit 4 und den Schwerpunkt 11 von Gefäßhalterung 7 und Gefäßen 8 übereinander fluchtend anzuordnen. Nach weiteren vorteilhaften Merkmalen wird daher vorgeschlagen, daß der gemeinsame Schwerpunkt 11 von Gefäßhalterung 7 und Gefäßen 8 in einem nur geringen Seitenabstand, gemessen in der Ebene der Exzenterbewegung, zu der Drehachse 12 der Exzentereinheit 4 liegt bzw. daß der Seitenabstand kleiner als die Bauhöhe H der Exzentereinheit 4, gemessen senkrecht zur Ebene der Exzenterbewegung, vorzugsweise kleiner als 25%, bevorzugt kleiner als 10% und besonders bevorzugt kleiner als 5% der Bauhöhe H ist. Im allgemeinen wird es vorteilhaft sein, wenn der gemeinsame Schwerpunkt 11 von Gefäßhalterung 7 und Gefäßen 8 im wesentlichen auf der Drehachse der Exzentereinheit 4 liegt.

Die Fig. 3 zeigt eine detaillierte Darstellung der Exzentereinheit 4 mit Gefäßhalterung 7 und darin eingesetzten Gefäßen 8. Der Antriebsmotor 3 ist nach unten abgebrochen dargestellt. Sein Rotor 17 treibt eine Motorachse 18 an, die die Exzentereinheit 4 in Bewegung versetzt. Die Exzentereinheit 4 umfaßt einen Exzenter 19, Kugellager 20, eine Schlitzscheibe 21 zur Drehzahlerfassung und die Ausgleichsmasse 5. Die Exzentereinheit 4 weist eine Nabe 22 auf, die die Aufnahme für die darauf aufgesetzte Gefäßhalterung 7 bildet. Dabei kann ein elastisches Element, beispielsweise ein Gummielement 23, vorgesehen sein, um eine Rotation der Gefäßhalterung 7 zu verhindern.

Die Gefäßhalterung 7 weist Aufnahmeöffnungen oder andere Befestigungselemente zum Aufnehmen oder Befestigen der Gefäße 8 auf. Die Gefäßhalterung 7 ist um die Exzentereinheit 4 herum angeordnet. Das gilt auch für die von der Gefäßhalterung 7 getragenen Gefäße 8, die in dem dargestellten Ausführungsbeispiel sowohl nach oben als auch nach unten über die Exzentereinheit 4 hinausragen, so daß ihr Schwerpunkt bzw. der gemeinsame Schwerpunkt 11 von Gefäßhalterung 7 und Gefäßen 8 einen möglichst geringen Höhenabstand h zum Schwerpunkt 10 der Exzentereinheit 4 aufweist. Damit die Gefäße 8 nach unten über die Exzentereinheit 4 hervorstehen können, weist das Gehäuse 1 entsprechende Aussparungen 24 (siehe Fig. 2) auf.

In Fig. 4 ist eine Abwandlung des Schüttel- und Mischgeräts 13 von Fig. 2 dargestellt, bei dem zum besseren Ausgleich eventuell verbleibender Vibrationen der Elektroantrieb mit Exzentereinheit 4 und Gefäßhalterung 7 mittels einer elastischen Aufhängung 25 mit dem Gehäuse 1 des Geräts oder mit einer schweren Grundplatte 26 des Geräts 13 verbunden ist.

Die Gefäßhalterung 7 kann so gestaltet sein, daß Gefäße 8 beliebiger Formen aufgenommen werden können. Die Gefäßhalterung kann aus beliebigem Material sein, beispielsweise einem Elastomer, einem Kunststoff oder aus Metall, und kann sowohl starr sein als auch eine Eigenflexibilität aufweisen. Die Gefäße 8 sind vorteilhafterweise auf einem oder mehreren Kreisen liegend auf der Gefäßhalterung 7 angeordnet, es können aber auch andere beliebige Plazierungen, zum Beispiel in einem Rechteck oder einem Rechteckraster, vorgenommen werden.

In den Figuren 1 bis 4 sind als Gefäße 8 Reagenzgläser dargestellt. In den folgenden Figuren werden teilweise Gefäßhalterungen 7 für andere Gefäßformen erläutert. Die Gefäßhalterungen 7 können auswechselbar auf der Exzentereinheit 4 angeordnet sein, so daß ein schneller Austausch für den jeweiligen Anwendungsfall ermöglicht wird. Nach einem weiteren vorteilhaften Merkmal kann vorgesehen sein, daß die Gefäßhalterung 7 auswechselbare Tragelemente zum Befestigen von Gefäßen 8 an der Gefäßhalterung 7 aufweist.

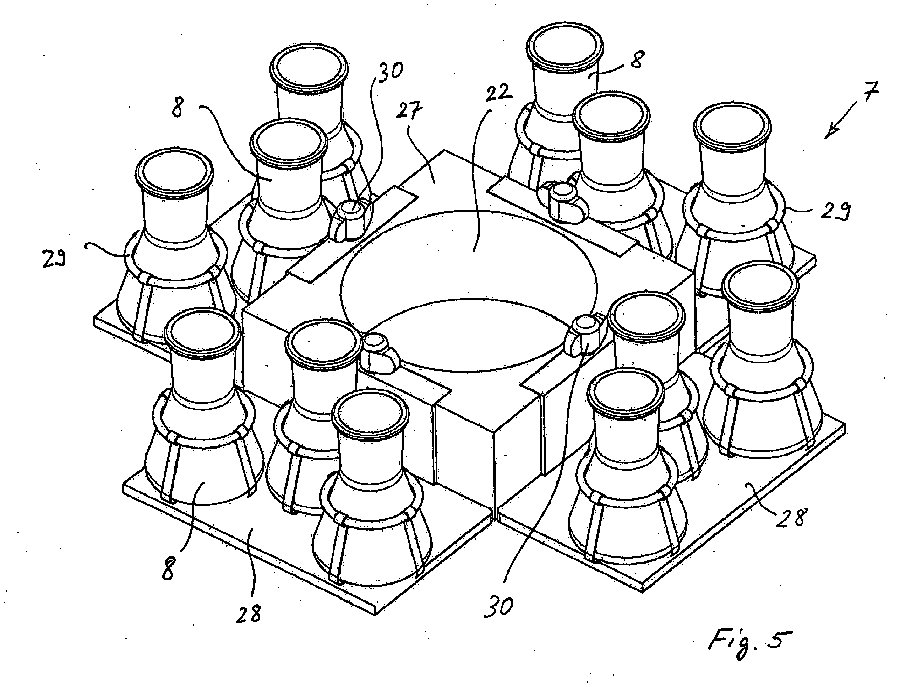

In Fig. 5 ist ein Ausführungsbeispiel einer Gefäßhalterung 7 für Gefäße 8 dargestellt, bei denen es sich um Erlenmeyer-Kolben oder ähnliche Gefäße handelt. Sie umfaßt einen rechteckigen Aufsatz 27 mit der Nabe 22, die auf die Nabe 22 der Exzentereinheit 4 aufgesetzt wird. Der Aufsatz 27 ist mit Tragplatten 28 versehen, die die Tragelemente für die Gefäße 8 bilden. Die Gefäße 8 werden mit Halteklammern 29 auf den Tragplatten 28 gehalten, und die Tragplatten 28 sind mittels Befestigungsschrauben 30 auswechselbar an dem Aufsatz 27 befestigt. Man erkennt in Fig. 5, daß die Tragplatten 28 unterhalb der Oberkante des Aufsatzes 27 angeordnet sind, so daß der gemeinsame Schwerpunkt von Gefäßhalterung 7 und Gefäßen 8 tief liegt und möglichst mit dem Schwerpunkt der Exzentereinheit 4, auf die der Aufsatz 27 aufgesetzt wird, zusammenfällt.

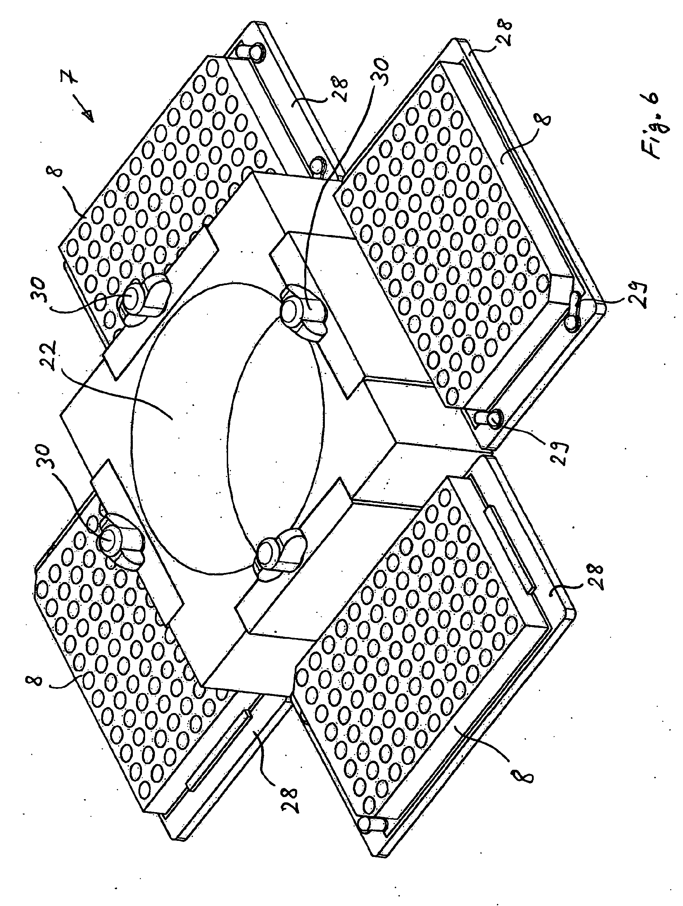

Die Fig. 6 zeigt eine Gefäßhalterung 7 für Gefäße 8, bei denen es sich um Mikrotiterplatten handelt. Diese werden mit Halteklammern 29 auf Tragplatten 28 befestigt. Im übrigen entspricht die Ausbildung der Gefäßhalterung 7 von Fig. 6 weitgehend der von Fig. 5.

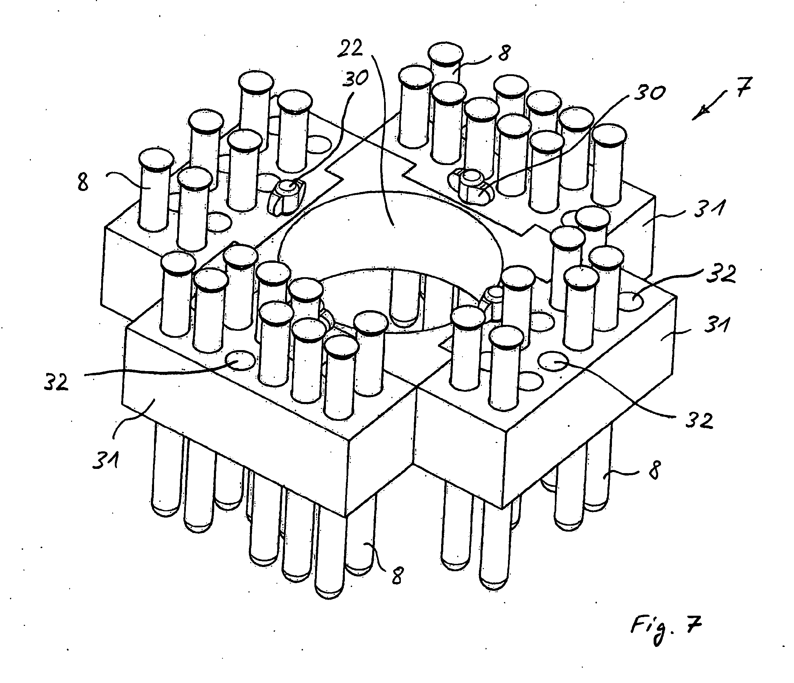

In Fig. 7 ist in einer Abwandlung zu Fig. 5 eine weitere erfindungsgemäße Gefäßhalterung 7 dargestellt, die Reagenzglasblöcke 31 zum Aufnehmen von Reagenzgläsern enthält. Die Reagenzglasblöcke 31 sind mit Aufnahmebohrungen 32 versehen, in die die Reagenzgläser hineingesteckt werden. Der übrige Aufbau entspricht dem der Gefäßhalterung 7 von Fig. 5.

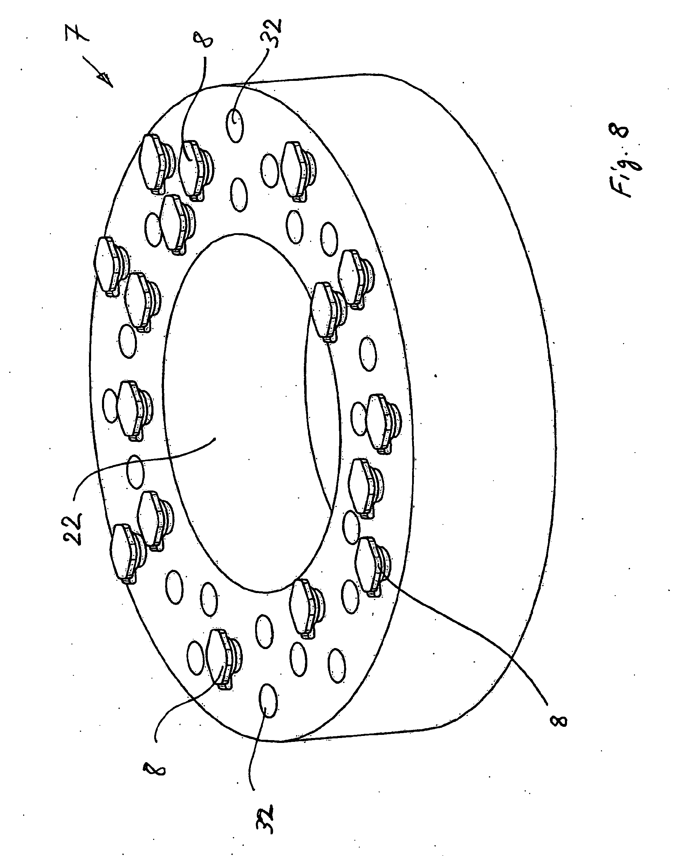

Die Fig. 8 zeigt eine ringförmig ausgebildete Gefäßhalterung 7 mit Aufnahmebohrungen 32 für Reaktionsgefäße und kleine Reagenzgläser. Auch diese Gefäßhalterung wird mit einer Nabe 22 auf eine entsprechende Aufnahmeschulter der Exzentereinheit 4 aufgesetzt, so daß die Gefäße 8 um die Exzentereinheit 4 herum angeordnet sind.

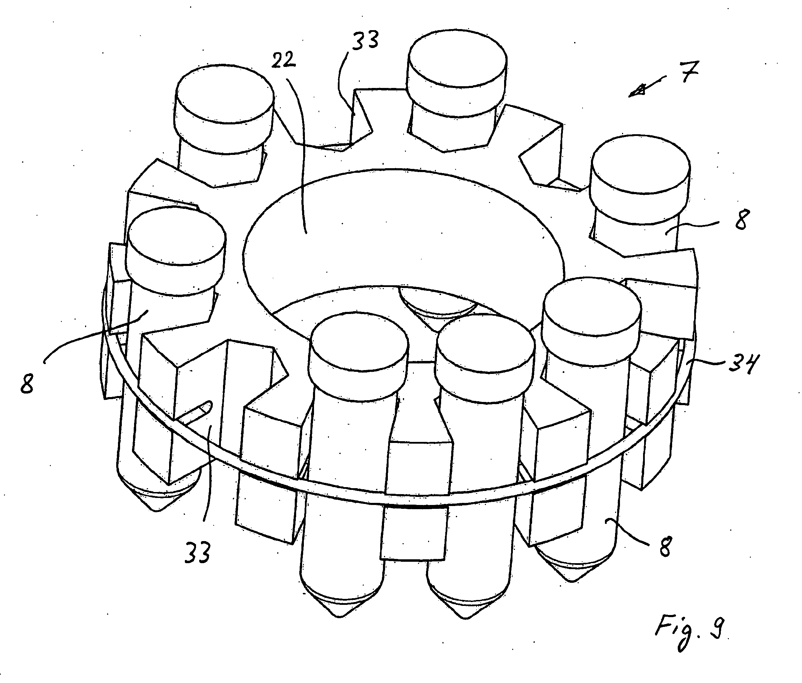

Die Figuren 9 und 10 veranschaulichen bevorzugte Ausführungsformen einer Gefäßhalterung 7 für Gefäße 8 in Form von Röhrchen oder Reagenzgläsern. In Fig. 9 ist eine Ausführungsform für Gefäße 8 mit einem größeren Durchmesser, beispielsweise größer als 20 mm, und in Fig. 10 eine entsprechende Gefäßhalterung 7 für Gefäße 8 mit einem kleineren Durchmesser, beispielsweise unter 20 mm, dargestellt. Die Besonderheit der in den Figuren 9 und 10 dargestellten Gefäßhalterung 7 besteht darin, daß sie nutenförmige, senkrecht zur Exzenterbewegung verlaufende Aufnahmeschlitze 33 aufweist, die entlang des Umfangs der Gefäßhalterung 7 angeordnet sind.

Die Gefäße 8 werden in die Aufnahmeschlitze 33 eingesteckt und festgeklemmt. Erforderlichenfalls kann vorgesehen sein, daß die Gefäßhalterung 7 ein elastisches, entlang des Umfangs der Gefäßhalterung 7 verlaufendes Halteelement 34, beispielsweise in Form eines gummielastischen Haltebandes oder einer Spiralfeder, zum Einspannen der Gefäße 8 in den Aufnahmeschlitzen 33 aufweist.

Ein besonderer Vorteil der in den Figuren 9 und 10 dargestellten Ausführungsform liegt darin, daß während des Schüttelns und Mischens die in den Gefäßen 8 enthaltenen Proben einsehbar sind. Dadurch ist es möglich, den Mischeffekt, d.h. die Ausbildung eines Mischtrichters in der Probe, zu überprüfen oder eine in den Gefäßen 8 ablaufende Reaktion zu kontrollierten.

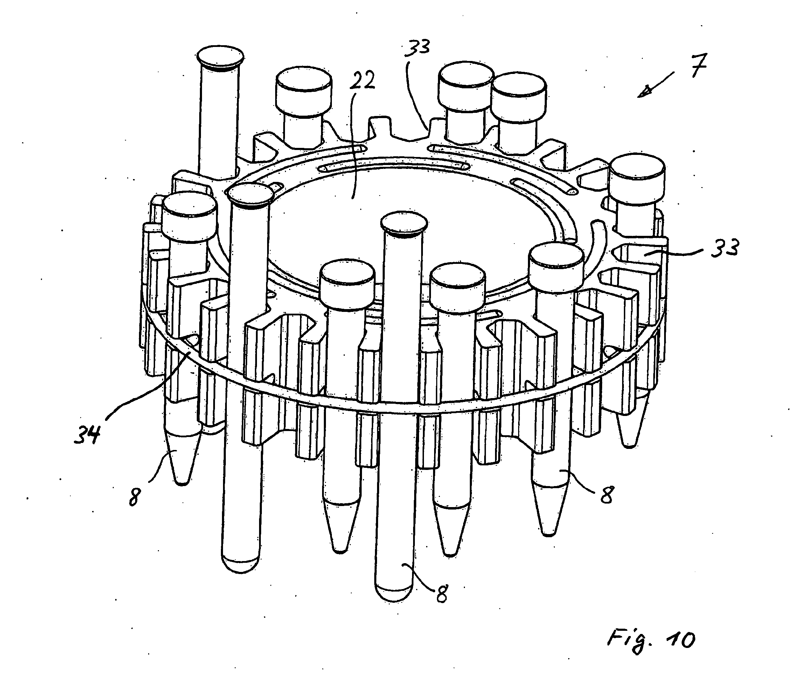

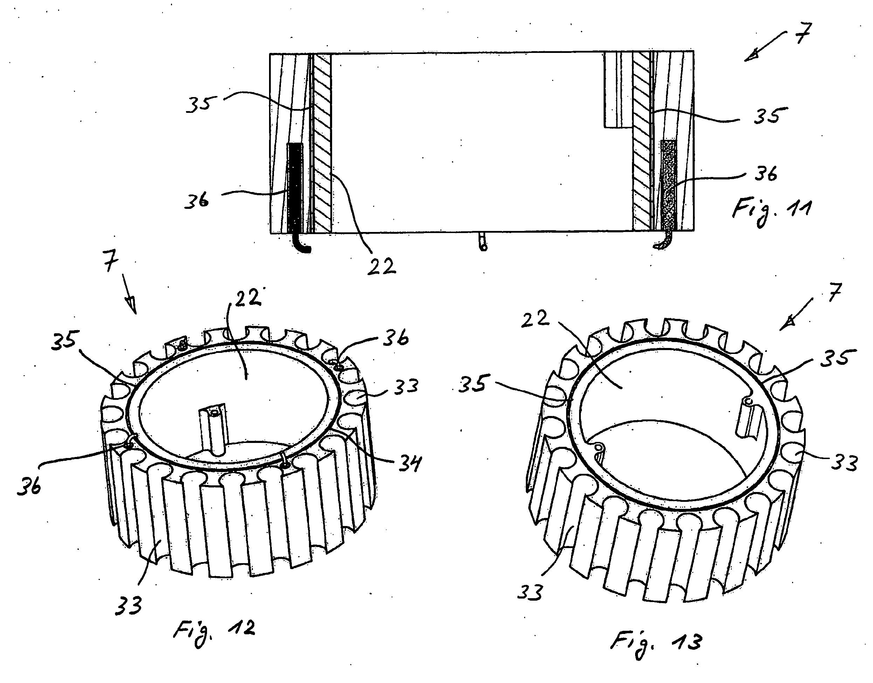

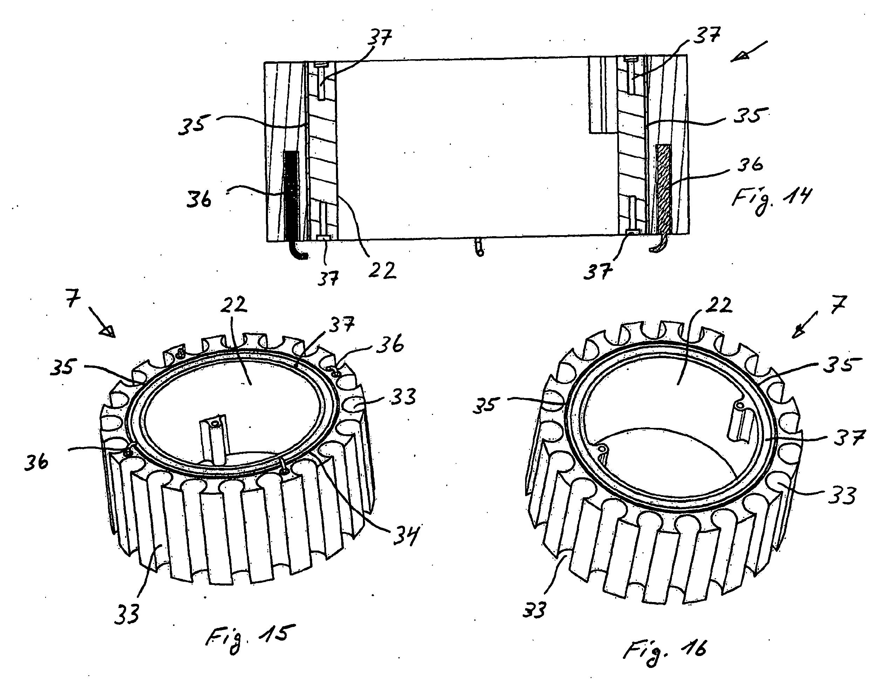

Nach weiteren vorteilhaften Merkmalen kann es vorgesehen sein, insbesondere wenn in den Gefäßen 8 Reaktionen bei definierter Temperatur stattfinden sollen, wenn eine erfindungsgemäße Gefäßhalterung 7 eine Heizeinrichtung zum Beheizen der Gefäßhalterung und/oder eine Kühleinrichtung zum Kühlen der Gefäßhalterung 7 aufweist. Die Figuren 11 bis 13 zeigen in einer Abwandlung zu Fig. 10 eine Gefäßhalterung 7 mit einer Heizeinrichtung 35 in Form eines Heizbandes sowie Temperaturfühlern 36 zum Regeln der Heizleistung. Die in den Figuren 14 bis 16 dargestellte Gefäßhalterung 7 ist zusätzlich noch mit einer Kühleinrichtung 37 in Form eines Kühlkanals ausgebildet. Die optional zu verwendenden Halteelemente 34 der Fig. 10 sind der Übersichtlichkeit halber nicht dargestellt.

### Bezugszeichenliste

- 1: Gehäuse
- 2: Bedienelemente
- 3: elektrischer Antriebsmotor
- 4: Exzentereinheit
- 5: Ausgleichsmasse
- 6: Schütteltisch
- 7: Gefäßhalterung
- 8: Gefäß
- 9: Schwerpunkt Gerät
- 10: Schwerpunkt Exzentereinheit
- 11: Schwerpunkt Gefäßhalterung und Gefäße
- 12: Drehachse
- 13: Schüttel- und Mischgerät
- 14: oberster Punkt zu 4
- 15: unterster Punkt zu 4
- 16: unterster Punkt zu 8
- 17: Rotor
- 18: Motorachse
- 19: Exzenter
- 20: Kugellager
- 21: Schlitzscheibe
- 22: Nabe
- 23: Gummielement
- 24: Aussparungen
- 25: elastische Aufhängung
- 26: Grundplatte
- 27: Aufsatz
- 28: Tragplatte
- 29: Halteklammer
- 30: Befestigungsschraube
- 31: Reagenzglasblock
- 32: Aufnahmebohrung
- 33: Aufnahmeschlitz
- 34: Halteelement
- 35: Heizeinrichtung
- 36: Temperaturfühler
- 37: Kühleinrichtung

- h: Höhenabstand
- H: Bauhöhe zu 4

## Patentansprüche

1. Schüttel- und Mischgerät (13) mit einem elektrischen Antrieb (3), einer von dem Antrieb (3) angetriebenen Exzentereinheit (4) und einer von der Exzentereinheit (4) bewegten Gefäßhalterung (7), die zur Aufnahme der von dem Schüttel- und Mischgerät (13) zu bewegenden Gefäße (8) ausgebildet ist,
wobei sich der gemeinsame Schwerpunkt (11) von Gefäßhalterung (7) und Gefäßen (8) innerhalb der Exzentereinheit (4) befindet, und
wobei die Gefäßhalterung (7) im Betrieb in einer parallel zur Exzenterbewegung orientierten Ebene eine Kreisbewegung ausführt, so daß sich in flüssigen Proben in von der Gefäßhalterung (7) aufgenommenen Gefäßen (8) ein Schütteltrichter befindet.

2. Schüttel- und Mischgerät nach Anspruch 1, **dadurch gekennzeichnet, daß** die Gefäße (8) und die Gefäßhalterung (7) um die Exzentereinheit (4) herum angeordnet sind.

3. Schüttel- und Mischgerät (13) nach einem der vorhergehenden Ansprüche, **dadurch gekennzeichnet, daß** der Schwerpunkt (11) von Gefäßhalterung (7) und Gefäßen (8) unterhalb der in der Exzenterbewegung orientierten Ebene, in der sich der oberste Punkt (14) der Exzentereinheit (4) befindet, angeordnet ist.

4. Schüttel- und Mischgerät (13) nach einem der vorhergehenden Ansprüche, **dadurch gekennzeichnet, daß** der Schwerpunkt (11) von Gefäßhalterung (7) und Gefäßen (8) oberhalb der in der Exzenterbewegung orientierten Ebene, in der sich der unterste Punkt (15) der Exzentereinheit (4) befindet, angeordnet ist.

5. Schüttel- und Mischgerät (13) nach einem der vorhergehenden Ansprüche, **dadurch gekennzeichnet, daß** der unterste Punkt (16) der Gefäße (8) unterhalb der in der Exzenterbewegung orientierten Ebene, in der sich der unterste Punkt (15) der Exzentereinheit (4) befindet, angeordnet ist.

6. Schüttel- und Mischgerät (13) nach einem der vorhergehenden Ansprüche, **dadurch gekennzeichnet, daß** der Höhenabstand (h) zwischen der Ebene des Schwerpunkts (11) von Gefäßhalterung (7) und Gefäßen (8) und der Ebene des Schwerpunkts (10) der Exzentereinheit (4) kleiner als die Bauhöhe (H) der Exzentereinheit (4), gemessen senkrecht zur Ebene der Exzenterbewegung, vorzugsweise kleiner als 50 %, bevorzugt kleiner als 25 % und besonders bevorzugt kleiner als 10 % der Bauhöhe (H) ist.

7. Schüttel- und Mischgerät (13) nach einem der vorhergehenden Ansprüche, **dadurch gekennzeichnet, daß** die Ebene des Schwerpunkts (11) von Gefäßhalterung (7) und Gefäßen (8) und die Ebene des Schwerpunkts (10) der Exzentereinheit (4) sich im wesentlichen decken.

8. Schüttel- und Mischgerät (13) nach einem der vorhergehenden Ansprüche, **dadurch gekennzeichnet, daß** der gemeinsame Schwerpunkt (11) von Gefäßhalterung (7) und Gefäßen (8) in einem nur geringen Seitenabstand, gemessenen in der Ebene der Exzenterbewegung, zu der Drehachse (12) der Exzentereinheit (4) liegt.

9. Schüttel- und Mischgerät (13) nach Anspruch 8, **dadurch gekennzeichnet, daß** der Seitenabstand kleiner als die Bauhöhe (H) der Exzentereinheit (4), gemessen senkrecht zur Ebene der Exzenterbewegung, vorzugsweise kleiner als 25 %, bevorzugt kleiner als 10 % und besonders bevorzugt kleiner als 5 % der Bauhöhe (H) ist.

10. Schüttel- und Mischgerät (13) nach Anspruch 8, **dadurch gekennzeichnet, daß** der gemeinsame Schwerpunkt (11) von Gefäßhalterung (7) und Gefäßen (8) im wesentlichen auf der Drehachse (12) der Exzentereinheit (4) liegt.

11. Schüttel- und Mischgerät (13) nach einem der vorhergehenden Ansprüche, **dadurch gekennzeichnet, daß** der Höhen- und/oder Seitenabstand auf leere, in die Gefäßhalterung (7) eingesetzte Gefäße (8) bezogen ist.

12. Schüttel- und Mischgerät (13) nach einem der vorhergehenden Ansprüche, **dadurch gekennzeichnet, daß** der Höhen- und/oder Seitenabstand auf in die Gefäßhalterung (7) eingesetzte Gefäße (8) bezogen ist, die mit einer typischen Menge eines typischen Schüttel- oder Mischgutes befüllt sind.

13. Schüttel- und Mischgerät (13) nach einem der vorhergehenden Ansprüche, **dadurch gekennzeichnet, daß** der Elektroantrieb (3) mit Exzentereinheit (4) und Gefäßhalterung (7) mittels einer elastischen Aufhängung (25) mit dem Gehäuse (1) des Gerätes (13) oder mit einer Grundplatte (26) des Gerätes (13) verbunden ist.

14. Schüttel- und Mischgerät (13) nach einem der vorhergehenden Ansprüche, **dadurch gekennzeichnet, daß** die Gefäße (8) auf einem oder mehreren Kreisen liegend auf der Gefäßhalterung (7) angeordnet sind.

15. Schüttel- und Mischgerät (13) nach einem der vorhergehenden Ansprüche, **dadurch gekennzeichnet, daß** die Gefäßhalterung (7) auswechselbar auf der Exzentereinheit (4) angeordnet ist.

16. Schüttel- und Mischgerät (13) nach einem der vorhergehenden Ansprüche, **dadurch gekennzeichnet, daß** die Gefäßhalterung (7) auswechselbare Tragelemente zum Befestigen von Gefäßen (8) an der Gefäßhalterung (7) aufweist.

17. Schüttel- und Mischgerät (13) nach einem der vorhergehenden Ansprüche, **dadurch gekennzeichnet, daß** die Gefäßhalterung (7) ringförmig ausgebildet ist.

18. Schüttel- und Mischgerät (13) nach einem der vorhergehenden Ansprüche, **dadurch gekennzeichnet, daß** die Gefäßhalterung (7) nutenförmige, senkrecht zur Exzenterbewegung verlaufende Aufnahmeschlitze (33) aufweist, die entlang des Umfangs der Gefäßhalterung (7) angeordnet sind.

19. Schüttel- und Mischgerät (13) nach Anspruch 18, **dadurch gekennzeichnet, daß** die Gefäßhalterung (7) ein elastisches, entlang des Umfangs der Gefäßhalterung (7) verlaufendes Halteelement (34) zum Einspannen der Gefäße (8) in den Aufnahmeschlitzen (33) aufweist.

20. Schüttel- und Mischgerät (13) nach einem der vorhergehenden Ansprüche, **dadurch gekennzeichnet, daß** es eine Heizeinrichtung (35) zum Beheizen der Gefäßhalterung (7) aufweist.

21. Schüttel- und Mischgerät (13) nach einem der vorhergehenden Ansprüche, **dadurch gekennzeichnet, daß** es eine Kühleinrichtung (37) zum Kühlen der Gefäßhalterung (7) aufweist.

## Claims

1. Shaking and mixing apparatus (13), comprising an electric drive (3), an eccentric unit (4) driven by the drive (3) and a vessel holder (7) agitated by the eccentric unit (4) and configured to receive the vessels (8) to be agitated by the shaking and mixing apparatus (13), wherein the common centre of gravity (11) of vessel holder (7) and vessels (8) is located within the eccentric unit (4), and wherein the vessel holder (7) executes in operation a circular motion in a plane oriented parallel to the eccentric motion, so that a shaking funnel is located in liquid specimens contained in vessels (8) accommodated by the vessel holder (7).

2. Shaking and mixing apparatus according to claim 1, **characterised in that** the vessels (8) and the vessel holder (7) are arranged around the eccentric unit (4).

3. Shaking and mixing apparatus (13) according to either of the preceding claims, **characterised in that** the centre of gravity (11) of vessel holder (7) and vessels (8) is arranged below the plane oriented in the eccentric motion in which the highest point (14) of the eccentric unit (4) is located.

4. Shaking and mixing apparatus (13) according to any one of the preceding claims, **characterised in that** the centre of gravity (11) of vessel holder (7) and vessels (8) is arranged above the plane oriented in the eccentric motion in which the lowest point (15) of the eccentric unit (4) is located.

5. Shaking and mixing apparatus (13) according to any one of the preceding claims, **characterised in that** the lowest point (16) of the vessels (8) is arranged below the plane oriented in the eccentric motion in which the lowest point (15) of the eccentric unit (4) is located.

6. Shaking and mixing apparatus (13) according to any one of the preceding claims, **characterised in that** the vertical distance (h) between the plane of the centre of gravity (11) of vessel holder (7) and vessels (8) and the plane of the centre of gravity (10) of the eccentric unit (4) is less than the overall height (H) of the eccentric unit (4), measured perpendicularly to the plane of the eccentric motion, preferably less than 50%, more preferably less than 25% and especially preferably less than 10% of the overall height (H).

7. Shaking and mixing apparatus (13) according to any one of the preceding claims, **characterised in that** the plane of the centre of gravity (11) of vessel holder (7) and vessels (8) and the plane of the centre of gravity (10) of the eccentric unit (4) substantially coincide.

8. Shaking and mixing apparatus (13) according to any one of the preceding claims, **characterised in that** the common centre of gravity (11) of vessel holder (7) and vessels (8) is located at only a short lateral distance, measured in the plane of the eccentric motion, from the axis of rotation (12) of the eccentric unit (4).

9. Shaking and mixing apparatus (13) according to claim 8, **characterised in that** the lateral distance is less than the overall height (H) of the eccentric unit (4), measured perpendicularly to the plane of the eccentric motion, preferably less than 25%, more preferably less than 10% and especially preferably less than 5% of the overall height (H).

10. Shaking and mixing apparatus (13) according to claim 8, **characterised in that** the common centre of gravity (11) of vessel holder (7) and vessels (8) lies substantially on the axis of rotation (12) of the eccentric unit (4).

11. Shaking and mixing apparatus (13) according to any one of the preceding claims, **characterised in that** the vertical and/or lateral distance is related to empty vessels (8) inserted in the vessel holder (7).

12. Shaking and mixing apparatus (13) according to any one of the preceding claims, **characterised in that** the vertical and/or lateral distance is related to vessels (8) inserted in the vessel holder (7) which contain a typical quantity of a typical product for shaking or mixing.

13. Shaking and mixing apparatus (13) according to any one of the preceding claims, **characterised in that** the electric drive (3) with the eccentric unit (4) and the vessel holder (7) is connected to the housing (1) of the apparatus (13) or to a base plate (26) of the apparatus (13) by means of an elastic suspension (25).

14. Shaking and mixing apparatus (13) according to any one of the preceding claims, **characterised in that** the vessels (8) are arranged on one or more circles disposed horizontally on the vessel holder (7).

15. Shaking and mixing apparatus (13) according to any one of the preceding claims, **characterised in that** the vessel holder (7) is arranged exchangeably on the eccentric unit (4).

16. Shaking and mixing apparatus (13) according to any one of the preceding claims, **characterised in that** the vessel holder (7) includes exchangeable support elements for attaching vessels (8) to the vessel holder (7).

17. Shaking and mixing apparatus (13) according to any one of the preceding claims, **characterised in that** the vessel holder (7) has an annular configuration.

18. Shaking and mixing apparatus (13) according to any one of the preceding claims, **characterised in that** the vessel holder (7) includes groove-shaped receiving slots (33) disposed perpendicularly to the eccentric motion and arranged around the periphery of the vessel holder (7).

19. Shaking and mixing apparatus (13) according to claim 18, **characterised in that** the vessel holder (7) includes an elastic retaining element (34) disposed around the periphery of the vessel holder (7) for firmly retaining the vessels (8) in the receiving slots (33).

20. Shaking and mixing apparatus (13) according to any one of the preceding claims, **characterised in that** it includes a heating device (35) for heating the vessel holder (7).

21. Shaking and mixing apparatus (13) according to any one of the preceding claims, **characterised in that** it includes a cooling device (37) for cooling the vessel holder (7).

## Revendications

1. Appareil pour agiter et mélanger (13) comportant un entraînement électrique (3), une unité d'excentrique (4) entraînée par l'entraînement (3) et un support de récipients (7) mis en mouvement par l'unité d'excentrique (4), qui est configuré pour recevoir les récipients (8) devant être mis en mouvement par l'appareil pour agiter et mélanger (13)
dans lequel le centre de gravité (11) commun du support de récipients (7) et des récipients (8) se situe à l'intérieur de l'unité d'excentrique (4) et
dans lequel le support de récipients (7) en service exécute un mouvement circulaire dans un plan orienté parallèlement au mouvement excentrique de sorte qu'il existe un vortex d'agitation dans les échantillons liquides dans les récipients (8) reçus dans le support de récipients (7).

2. Appareil pour agiter et mélanger selon la revendication 1, **caractérisé en ce que** les récipients (8) et le support de récipients (7) sont disposés autour de l'unité d'excentrique (4).

3. Appareil pour agiter et mélanger (13) selon l'une des revendications précédentes, **caractérisé en ce que** le centre de gravité (11) du support de récipients (7) et des récipients (8) est disposé en dessous du plan orienté dans le mouvement excentrique dans lequel se situe le point le plus haut (14) de l'unité d'excentrique (4) .

4. Appareil pour agiter et mélanger (13) selon l'une des revendications précédentes, **caractérisé en ce que** le centre de gravité (11) du support de récipients (7) et des récipients (8) est disposé au-dessus du plan orienté dans le mouvement excentrique dans lequel se situe le point le plus bas (15) de l'unité d'excentrique (4) .

5. Appareil pour agiter et mélanger (13) selon l'une des revendications précédentes, **caractérisé en ce que** le point le plus bas (16) des récipients (8) est disposé en dessous du plan orienté dans le mouvement excentrique dans lequel se situe le point le plus bas (15) de l'unité d'excentrique (4).

6. Appareil pour agiter et mélanger (13) selon l'une des revendications précédentes, **caractérisé en ce que** l'écartement en hauteur (h) entre le plan du centre de gravité (11) du support de récipients (7) et les récipients (8) et le plan du centre de gravité (10) de l'unité d'excentrique (4) est inférieur à la hauteur de construction (H) de l'unité d'excentrique (4), mesuré perpendiculairement au plan du mouvement excentrique, de préférence inférieur à 50 %, de manière préférée inférieur à 25 % et de manière particulièrement préférée inférieur à 10 % de la hauteur de construction (H).

7. Appareil pour agiter et mélanger (13) selon l'une des revendications précédentes, **caractérisé en ce que** le plan du centre de gravité (11) du support de récipients (7) et des récipients (8) et le plan du centre de gravité (10) de l'unité d'excentrique (4) coïncident sensiblement.

8. Appareil pour agiter et mélanger (13) selon l'une des revendications précédentes, **caractérisé en ce que** le centre de gravité (11) commun du support de récipients (7) et des récipients (8) se situe à une distance latérale, mesurée dans le plan du mouvement excentrique, seulement minime de l'axe de rotation (12) de l'unité d'excentrique (4).

9. Appareil pour agiter et mélanger (13) selon la revendication 8, **caractérisé en ce que** l'écartement latéral est inférieur à la hauteur de construction (H) de l'unité d'excentrique (4), mesurée perpendiculairement au plan du mouvement excentrique, de préférence inférieur à 25 %, de manière préférée inférieur à 10 % et de manière particulièrement préférée inférieur à 5 % de la hauteur de construction (H).

10. Appareil pour agiter et mélanger (13) selon la revendication 8, **caractérisé en ce que** le centre de gravité (11) commun du support de récipients (7) et des récipients (8) se situe sensiblement sur l'axe de rotation (12) de l'unité d'excentrique (4).

11. Appareil pour agiter et mélanger (13) selon l'une des revendications précédentes, **caractérisé en ce que** l'écartement en hauteur et/ou latéral, qui selon l'invention doit être aussi minime que possible, se rapporte à des récipients (8) vides placés dans le support de récipients (7).

12. Appareil pour agiter et mélanger (13) selon l'une des revendications précédentes, **caractérisé en ce que** l'écartement en hauteur et/ou latéral se rapporte aux récipients (8) insérés dans le support de récipients (7), qui sont remplis d'une quantité typique d'un produit à agiter ou à mélanger typique.

13. Appareil pour agiter et mélanger (13) selon l'une des revendications précédentes, **caractérisé en ce que** l'entraînement électrique (3) avec l'unité d'excentrique (4) et le support de récipients (7) sont reliés au moyen d'une suspension élastique (25) au boîtier (1) de l'appareil (13) ou à une plaque de base (26) de l'appareil (13).

14. Appareil pour agiter et mélanger (13) selon l'une des revendications précédentes, **caractérisé en ce que** les récipients (8) sont disposés sur le support de récipients (7) sur un ou plusieurs cercles.

15. Appareil pour agiter et mélanger (13) selon l'une des revendications précédentes, **caractérisé en ce que** support de récipients (7) est disposé de manière échangeable sur l'unité d'excentrique (4).

16. Appareil pour agiter et mélanger (13) selon l'une des revendications précédentes, **caractérisé en ce que** le support de récipients (7) présente des éléments de support échangeables pour fixer des récipients (8) au support de récipients (7).

17. Appareil pour agiter et mélanger (13) selon l'une des revendications précédentes, **caractérisé en ce que** support de récipients (7) est configuré de manière annulaire.

18. Appareil pour agiter et mélanger (13) selon l'une des revendications précédentes, **caractérisé en ce que** le support de récipients (7) présente des fentes réceptrices (33) en forme de rainures, s'étendant perpendiculairement au mouvement excentrique, qui sont disposées le long du pourtour du support de récipients ()7.

19. Appareil pour agiter et mélanger (13) selon la revendication 18, **caractérisé en ce que** le support de récipients (7) comporte un élément de maintien élastique (34), s'étendant sur le pourtour du support de récipients (7), pour serrer les récipients (9) dans les fentes réceptrices (33).

20. Appareil pour agiter et mélanger (13) selon l'une des revendications précédentes, **caractérisé en ce qu'**il comporte un dispositif de chauffage (35) pour chauffer le support de récipients (7).

21. Appareil pour agiter et mélanger (13) selon l'une des revendications précédentes, **caractérisé en ce qu'**il comporte un dispositif de refroidissement (37) pour refroidir le support de récipients (7).
